# EUROPEAN PATENT SPECIFICATION

(11) **EP 2 927 581 B1**
(45) Date of publication and mention of the grant of the patent: **28.12.2016**
(21) Application number: 15397508.1
(22) Date of filing: 10.03.2015
(51) Int. Cl.: F22B 37/00, F23J 3/06, F23L 15/02, F23J 15/02

(54) **Space saving arrangement in a boiler**
Platzsparende Anordnung in einem Dampferzeuger
Agencement permettant de gagner de la place dans une chaudière

(30) Priority: 17.03.2014 FI 20145240
(43) Date of publication of application: 07.10.2015
(73) Proprietor: Valmet Technologies Oy, 02150 Espoo (FI)
(72) Inventor: Salonen, Pasi, 35300 ORIVESI (FI)
(74) Representative: Tampereen Patenttitoimisto Oy

(56) References cited:
- WO-A2-2010/128213
- DE-A1- 3 441 923
- DE-A1-102013 212 286
- FR-A- 1 424 831
- GB-A- 627 866
- US-A- 3 160 144
- US-A- 4 453 495

## Description

### Field of the invention

The invention relates to a boiler. The invention relates to a space saving arrangement in a boiler. The invention relates to a boiler whose flue gas duct is equipped with means for separating ash from flue gases. The invention relates to the arrangement of parts of the flue gas duct in relation to each other.

### Background of the invention

Boilers are used for burning combustible material and for producing energy. Flue gases are emitted upon combustion. Heat is recovered from the flue gases by heat exchangers placed in the flue gas duct or ducts, *inter alia.* Accumulation of ash on heat transfer surfaces impairs the heat transfer properties. Moreover, ash from flue gases can wear out the heat transfer surfaces. Flue gas ducts of prior art require that the boiler building comprises an area where different parts of the flue gas ducts can be placed.

The document WO2010/128213 discloses a thermal power boiler comprising a furnace, a flue gas channel connected to the furnace, said flue gas channel comprising a back pass arranged on a rear wall side of the furnace, and a pre-heater for combustion air provided with an inlet channel for flue gas.

### Brief summary of the invention

It is an aim of the present solution to present a boiler which comprises an ash separator in the flue gas duct and which requires a small area in the boiler house. Reducing the size of the boiler house reduces the investment costs of a power plant to a significant extent. The need for space for the boiler, particularly the need for building area, can be reduced by aligning some parts of the flue gas duct in the vertical direction, at least in part. Such a boiler is presented in the independent claim 1. In an embodiment, the boiler comprises
- a furnace,
- a flue gas duct comprising a first section, a second section and a third section, in which boiler
- said first section of the flue gas flow duct is configured to convey flue gases from said furnace to said second section of the flue gas flow duct,
- said second section of the flue gas flow duct is substantially vertical, and
- said third section of the flue gas flow duct is substantially vertical.

Said boiler further comprises
- means for collecting ash in the lower part of said second section of the flue gas flow duct, and
- a bypass duct for conveying flue gases from said second section of the flue gas flow duct to said third section of the flue gas flow duct.

Furthermore, in said boiler,
- said second section of the flue gas flow duct and said third section of the flue gas flow duct are arranged in such a way in relation to each other that the orthogonal projection of said third section of the flue gas flow duct on a horizontal plane comprises at least part of the orthogonal projection of said second section of the flue gas flow duct on said horizontal plane.

Advantageous embodiments are described in dependent claims 2 to 11.

### Description of the drawings

- Fig. 1a: shows a boiler, a circulating fluidized bed boiler, in a side view;
- Fig. 1b: shows parts of the flue gas duct of the boiler of Fig. 1a in more detail;
- Fig. 1c: shows a more detailed view of the means for collecting ash, arranged in the flue gas duct of the boiler of Figs. 1a and 1b;
- Fig. 1d: shows a top view of the means for conveying ash, arranged in the flue gas duct of the boiler of Figs. 1a, 1b and 1c;
- Fig. 2a: shows a boiler, namely a bubbling fluidized bed boiler, in a side view;
- Fig. 2b: shows parts of the flue gas duct of the boiler of Fig. 2a in more detail;
- Fig. 2c: shows a more detailed view of the means for collecting ash, arranged in the flue gas duct of the boiler of Figs. 2a and 2b;
- Fig. 3a: shows a second section 220 of a flue gas flow duct of a boiler, in a top view, as well as heat exchanger tubes 132 in said part 220;
- Fig. 3b: shows a third section 230 of a flue gas flow duct of a boiler, in a top view, as well as heat exchanger tubes 142 and 152 in said section 230; an enlargement of the area delimited by a broken line in the part on the right is shown on the left in the figure;
- Fig. 4: shows a boiler, a circulating fluidized bed boiler, in a side view, as well as filtering of flue gases and heating of combustion air in said boiler;
- Fig. 5a: illustrates means for collecting ash, which means comprise two ash collecting funnels; and
- Fig. 5b: illustrates the use of several ash conveyors and several bypass ducts in different embodiments.

### Detailed description of the invention

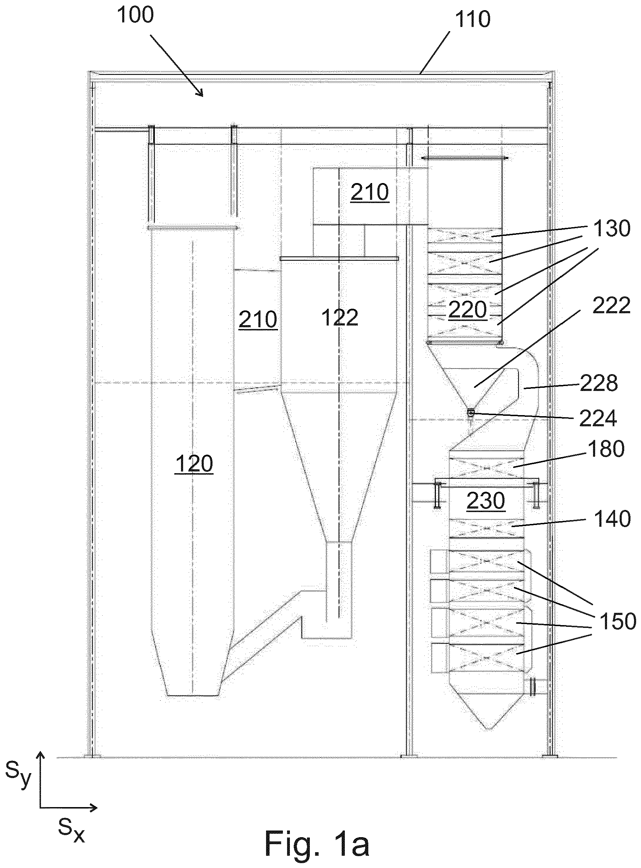

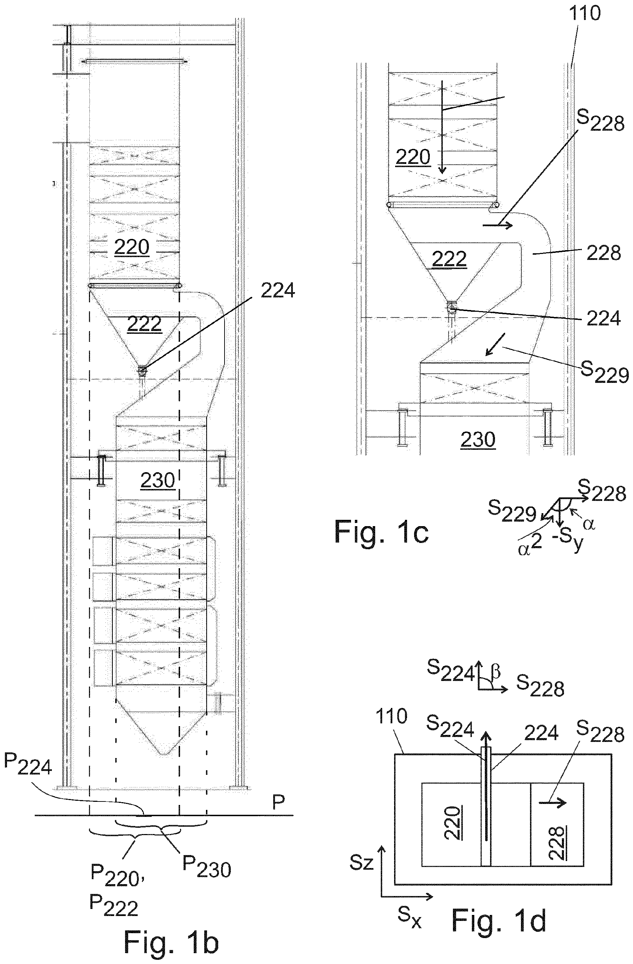

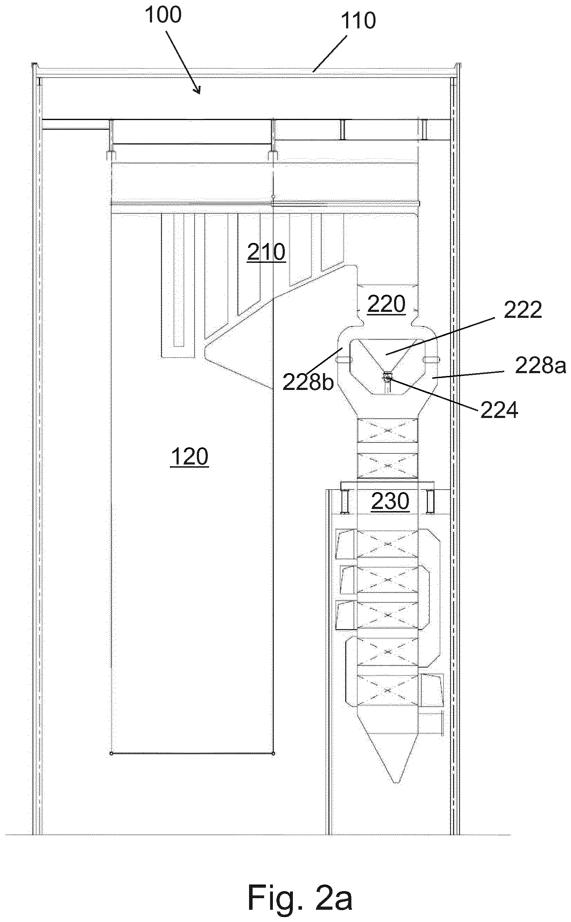

Figure 1 a shows a boiler 100 placed in a boiler house 110. The boiler comprises a furnace 120. The boiler 100 is used for burning combustible material in the furnace 120, and for producing energy. Flue gases are emitted upon combustion. Heat is recovered from the flue gases by heat exchangers 130, 140, 150, which are placed, *inter alia,* in the flue gas duct, for example in sections 220, 230 of the flue gas duct. Referring to Fig. 2a, heat exchangers can also be placed in other sections of the flue gas duct, such as in the first section 210. Accumulation of ash on heat transfer surfaces, such as the surfaces of the heat exchangers 130, 140, 150, impairs the heat transfer properties. Moreover, ash from flue gases can wear out the heat transfer surfaces. In some figures, references Sx and Sz are used to illustrate directions which are parallel to the horizontal plane and perpendicular to each other, and reference Sy to indicate the upward vertical direction. Correspondingly, -Sy indicates the downwards direction.

It is an aim of the present solution to present a boiler which comprises an ash separator in the flue gas duct and which requires a small area in the boiler house, compared with different arrangements of the sections of the flue gas duct.

The boiler 100 according to Fig. 1 a comprises
- a furnace 120,
- a flue gas flow duct 210, 220, 230, 228 comprising a first section 210, a second section 220 and a third section 230, in which boiler 100
- said first section 210 of the flue gas flow duct is arranged to convey flue gases from said furnace 120 to said second section 220 of the flue gas flow duct, and
- said second section 220 of the flue gas flow duct is substantially vertical.

The second section 220 of the flue gas flow duct is substantially vertical when the average flow direction of the flue gases, defined by it, forms an angle not greater than 10 degrees with the downward direction -Sy. As shown in Fig. 1a, the average direction in the second section 220 can also be directly downwards.

Also, said third section 230 of the flue gas flow duct is substantially vertical. Thus, the average direction of flue gases, defined by the third section 230 of the flue gas duct, forms an angle not greater than 10 degrees with the downward direction -Sy, or said flow direction is directly downwards.

For separating ash from the flue gases, the boiler 100 further comprises
- means 222 for collecting ash in the lower part of said second section 220 of the flue gas flow duct, and
- a by-pass duct 228 for conveying the flue gases from said second section 220 of the flue gas flow duct to said third section 230 of the flue gas flow duct. By means of the by-pass duct 228, the flue gas is made to by-pass said ash collecting means 222. Advantageously, the by-pass duct 228 is configured to convey flue gases from the lower part of said second section 220 of the flue gas flow duct to the upper part of said third section 230 of the flue gas flow duct.

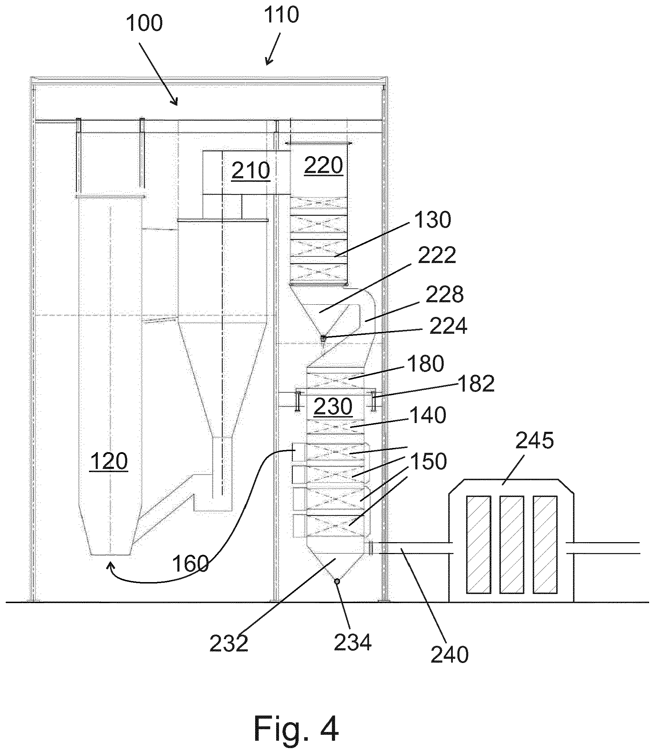

The ash collecting means 222 can comprise, for example, a funnel 222 for collecting ash. By means of the funnel 222, ash can be collected from the flue gas duct. Such a solution provides several advantages:
(1) Accumulation of ash on the surfaces of the third section 230 of the flue gas duct is reduced. As a result,
(2) heat transfer in the third section 230 is improved;
(3) if catalysts 180 are used e.g. for cleaning the flue gases, the action of the catalysts 180 is enhanced and/or the duration of action of the catalysts is extended in the third section 230;
(4) wearing of the heat transfer surfaces in the third section 230 is reduced;
(5) the need for cleaning the heat transfer surfaces in the third section 230 is reduced or eliminated; and
(6) if the flue gases are filtered downstream of the third section 230, the maintenance interval of the filter 245 for flue gases (Fig. 4) is extended.

Thanks to these advantages, it is possible to use, for example, catalysts 180 in the third section 230 of the flue gas duct for reducing harmful components in the flue gases. Such harmful components include, for example, nitrogen and sulphur oxides (NOₓ, SOₓ). The catalyst or catalysts can be selected according to the harmful component or components to be reduced. In an embodiment of the invention, the third section 230 of the flue gas duct is provided with a catalyst 180 for cleaning the flue gases. The catalyst can be arranged in the third section 230 of the duct, in the form of, for example, a catalyst packet 180. In an embodiment of the invention, the third section 230 is not provided with a catalyst.

The third section 230 of the flue gas duct is equipped with at least one heat exchanger 140, 150 for recovering heat from the flue gases. The heat exchangers 140, 150 can be used to recover heat in, for example, circulating water and/or combustion air in the boiler 100. Heat is recovered the more efficiently, the larger the heat transfer surface is. The heat transfer surface can be increased, for example, by equipping the heat transfer pipe of the heat exchanger with a rib. Alternatively or in addition, the heat transfer surface can be increased by using several heat transfer pipes, whereby the spacing between them is decreased. The use of a heat transfer pipe equipped with a rib in a contaminating environment would be limited, because ash and other contaminations are easily accumulated on the surfaces of the ribs, and the flow in the flue gas duct will eventually become difficult or even stop unless soot is sufficiently removed from the heat transfer surfaces. Soot removal and/or other cleaning of heat transfer pipes equipped with ribs is difficult.

The ash collecting means 222 can be used to remove at least part of the ash even upstream of the third section 230, wherein such problems are reduced. Correspondingly, in such a solution, more advantageous heat transfer pipes, such as those equipped with a rib, can be used in the heat exchangers 140, 150 in the third section 230.

The ash collecting funnel 222 is particularly efficient if the by-pass duct 228 forms a sufficiently great deviation in the flow direction of the flue gases, compared with the flow direction of the flue gases in the second section 220 of the flue gas duct. Thus, being a heavy material, the ash continues its travel directly into the funnel 222 while the actual flue gas of light weight flows into the by-pass duct 228. Now referring to Figs. 1 a and 1 c, in an embodiment,
- said by-pass duct 228 for conveying flue gases from said second section 220 of the flue gas flow duct to said third section 230 of the flue gas flow duct, determines a direction of the flue gases in the by-pass duct S₂₂₈ on the side of the second section 220 of the flue gas flow duct, and
- said direction of flue gases in the by-pass duct S₂₂₈ on the side of the second section 220 forms an angle α of at least 90 degrees with the downward direction -S_{y}.

In Fig. 1c, said angle α is exactly 90 degrees. Further, the collection of ash will be more efficient, if said angle is larger. Correspondingly, with a smaller angle, the deviation in the flow directions is not necessarily sufficient for collecting ash in the funnel 222. The angle α is smaller than 180 degrees.

Because the funnel 222 is configured to collect ash, in an embodiment it is prevented from being filled up by providing an ash conveyor 224 in its lower part. The ash conveyor 224 is advantageously a screw conveyor. Advantageously, the ash conveyor is water cooled, for recovering heat from the ash collected. Preferably, the ash conveyor 224 is a water-cooled screw conveyor. Thus, the ash conveyor 224 comprises a conveyor screw and a water circulation for cooling said screw.

Now referring to Fig. 1d, the ash conveyor 224 is advantageously configured to convey ash in a direction S₂₂₄ that forms an angle β of at least 90 degrees with said direction S₂₂₈ of flue gases determined by the by-pass duct. This facilitates the positioning of the by-pass duct 228 (or by-pass ducts 228a, 228b, 228c) and the ash conveying means 224 in relation to each other.

The need for space for said ash collecting system, particularly the need for area in the boiler house 110, can be reduced by the placement of the sections of the flue gas ducts. Referring to Fig. 1b, in a boiler according to an embodiment, the second section 220 of the flue gas flow duct and the third section 230 of the flue gas flow duct are positioned in such a way in relation to each other that
- the orthogonal projection P₂₃₀ of said third section 230 of the flue gas flow duct on a horizontal plane P comprises at least part of the orthogonal projection P₂₂₀ of said second section 220 of the flue gas flow duct on said horizontal plane P.

Figure 1b shows the above mentioned orthogonal projections P₂₂₀ and P₂₃₀ in side views only; it will be obvious for a person skilled in the art how the orthogonal projections are represented on the plane P seen from above. Further, said "orthogonal projection" is formed in the conventional way in the direction of the normal of said plane P, that is, in the vertical direction. Thus, in the presented case, the second section 220 and the third section 230 of the flue gas duct are at least partly overlapping in the vertical direction. Correspondingly, at least part of the third section 230 of the flue gas flow duct is below the second section 220 of the flue gas flow duct. The need for space is reduced the more, the more said parts are overlapping.

In an embodiment, the orthogonal projection P₂₃₀ of said third section 230 of the flue gas flow duct on the horizontal plane P comprises at least 50% of the orthogonal projection P₂₂₀ of said second section 220 of the flue gas flow duct on said horizontal plane P. In an embodiment, the orthogonal projection P₂₃₀ of said third section 230 of the flue gas flow duct on the horizontal plane P comprises at least 90% of the orthogonal projection P₂₂₀ of said second section 220 of the flue gas flow duct on said horizontal plane P. In an embodiment, the orthogonal projection P₂₃₀ of said third section 230 of the flue gas flow duct on the horizontal plane P comprises the whole orthogonal projection P₂₂₀ of said second section 220 of the flue gas flow duct on said horizontal plane P.

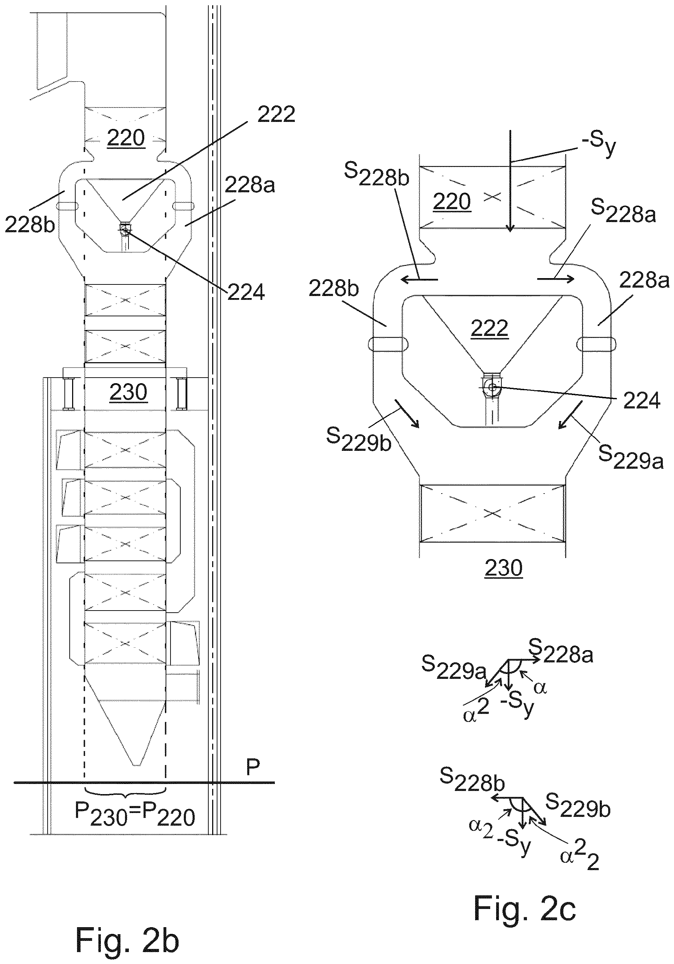

In the case of Fig. 1b, said percentage is about 70%. Thus, said percentage can be at least 70%. In the embodiments of Figs. 1 a to 1c, the second section 220 of the flue gas duct has a rectangular horizontal cross-section, and the third section 230 of the flue gas duct has a rectangular horizontal cross-section. It is obvious that also sections of the flue gas duct that have another shape can be positioned in the described way with respect to each other. In the embodiment of Fig. 2b, said percentage is 100%.

Further, the projection P₂₃₀ of said third section 230 of the flue gas duct on the horizontal plane P advantageously comprises at least part of the orthogonal projection P₂₂₂ formed by the ash collecting means 222 on said horizontal plane P. Because the funnel 222 can constitute the lower part of the flue gas flow duct 220, said orthogonal projection P₂₂₂ formed by the ash collecting means 222 on the horizontal plane P can be substantially the same as the orthogonal projection P₂₂₀ of said second section 220 of the flue gas flow duct on said horizontal plane P. This is also the case in Fig. 1b, for example.

Further, the projection P₂₃₀ of said third section 230 of the flue gas duct on the horizontal plane P advantageously comprises at least part of the orthogonal projection P₂₂₄ formed by the ash conveying means 224 on said horizontal plane P. This is also the case in Fig. 1b, for example.

The cross sections of the parts 220, 230 of the flue gas flow duct, and thereby said projections P₂₂₀ and P₂₃₀, are not necessarily equal in size. In an embodiment, the projection P₂₃₀ of the third section 230 of the flue gas flow duct on the horizontal plane P is greater than the projection P₂₂₀ of said second section 220 of the flue gas flow duct on said horizontal plane P.For example, it is possible to use a catalyst packet 180 whose horizontal size is greater than the cross section of the second section 220, wherein the pressure losses of the flow in the catalyst packet 180 are reduced accordingly.

Now referring to Fig. 1c, the upper part of the third section 230 of the flue gas flow duct can be provided with catalyst 180 and/or heat exchangers 140, 150. For the appropriate function of these, it is advantageous that the flue gas flow is evenly distributed on their entire surface, such as the surface of the heat exchanger 140, 150 or the surface of the catalyst 180. The flow can be levelled out on said surface when it is not conveyed to one edge of the third section 230 only, and/or it is not conveyed to the third section 230 in the horizontal direction. Advantageously, the by-pass duct 228 is so designed that
- said by-pass duct 228 for conveying flue gases from said second section 220 of the flue gas flow duct to said third section 230 of the flue gas flow duct, determines a second flow direction of the flue gases in the by-pass duct S₂₂₉ on the side of the third section 230 of the flue gas flow duct, and
- said second direction of flue gases in the by-pass duct on the side of the third section 230 forms an angle α² smaller than 90 degrees with the downward direction -Sy.

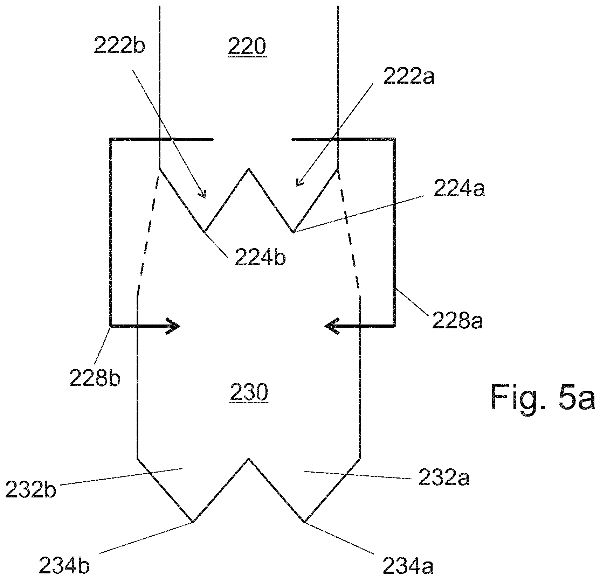

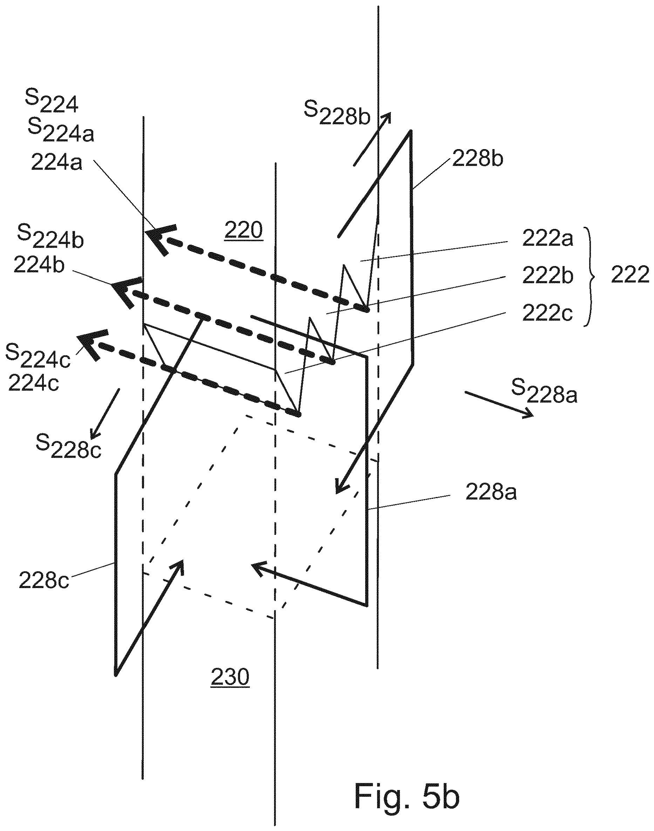

The angle α² is advantageously smaller than 75 degrees, more advantageously smaller than 60 degrees. In Figs. 1c and 2c, said angle α is not greater than 45 degrees. Instead of only one edge, the by-pass ducts 228a, 228b, 228c can be led to at least two edges of the the third section 230, as shown in Figs 2a, 5a and 5b, for example.

In the embodiment shown in Figs. 1 a to 1c, the boiler 100 is a circulating fluidized bed boiler (CFB boiler). Such a CFB boiler 100 further comprises a cyclone 122. In the CFB boiler, part of the first section 210 of the flue gas duct is configured to convey flue gases from the furnace 120 to the cyclone 122. Furthermore, part of the first section 210 of the flue gas duct is configured to convey flue gases from the cyclone 122 to said second section 220 of the flue gas flow duct.

The presented solution can also be applied in a bubbling fluidized bed boiler (BFB boiler). Figures 2a to 2c illustrate a solution in a BFB boiler. The boiler (BFB boiler) 100 of Figs. 2a to 2c also comprises a furnace 120. The boiler comprises a first section 210, a second section 220 and a third section 230 of the flue gas duct. Furthermore, the boiler comprises an ash collecting funnel 222 in the lower part of said second section 220 of the flue gas flow duct, and a first by-pass duct 228a for conveying flue gases from said second section 220 of the flue gas flow duct to said third section 230 of the flue gas flow duct. Referring to Fig. 2c, the boiler 100 further comprises
- a second by-pass duct 228b for conveying the flue gases from said second section 220 of the flue gas flow duct to said third section 230 of the flue gas flow duct,
- said second by-pass duct 228b for conveying flue gases from said second section 220 of the flue gas flow duct to said third section 230 of the flue gas flow duct determines a direction of the flue gases in the second by-pass duct S_{228b} on the side of the second section 220 of the flue gas flow duct,
- said direction of flue gases in the second by-pass duct S_{228b} on the side of the second section 220 forms a second angle α₂ of at least 90 degrees with the downward direction -Sy.

Correspondingly, the first by-pass duct 228a determines the direction of flue gases in the first by-pass duct S₂₂₈ₐ on the side of the second section 220 of the flue gas flow duct (Fig. 2c) in the same way as shown by the reference numeral S₂₂₈ in connection with Figs. 1a to 1c. Said direction of flow of the flue gases in the second by-pass duct S_{228b} forms an angle with said direction of flow of the flue gases in the first by-pass duct S₂₂₈ₐ. The orthogonal projections of said directions S₂₂₈ₐ and S_{228b} parallel to the horizontal plane can form an angle of at least 90 degrees (cf. Figs. 2c and 5b).

With such an orientation of the second by-pass duct 228b, the same advantages are achieved as described earlier in connection with the first direction S₂₂₈. Said second angle α₂ can be the same as the above-mentioned corresponding angle α.

In a corresponding way, in the boiler 100,
- said second by-pass duct 228b for conveying flue gases from said second section 220 of the flue gas flow duct to said third section 230 of the flue gas flow duct determines a direction of the flue gases in the second by-pass duct S_{229b} on the side of the third section 230 of the flue gas flow duct, and
- said second direction of the flue gases in the second by-pass duct S_{229b} forms another second angle α²₂ with the downward direction -Sy, which angle is smaller than 90 degrees.

Advantageously, said other second angle α²₂ is also smaller than 75 degrees, and more advantageously smaller than 60 degrees. With such an orientation of the second by-pass duct 228b, the same advantages are achieved as described earlier in connection with the first direction S₂₂₉. Said second second angle α²₂ can be the same as the corresponding angle α² mentioned previously.

Advantageously, the ash conveyor 224 is configured to convey ash in a direction that forms an angle of at least 90 degrees with both of said flow directions S₂₂₈ₐ and S_{228b}. This facilitates the positioning of the by-pass ducts 228a and 228b and the ash conveying means 224 in relation to each other.

Further, collecting ash in the funnel 222 can be made more efficient by the dimensioning of the by-pass duct 228 or the by-pass ducts 228a, 228b. Advantageously,
- said by-pass duct 228 - or said by-pass ducts 228a, 228b - for conveying flue gases from said second section 220 of the flue gas flow duct to said third section 230 of the flue gas flow duct is dimensioned in such a way that
- the flow velocity of flue gases in said by-pass duct 228 is at least equal to the flow velocity of flue gases in said second section 220 of the flue gas flow duct.

At such a flow velocity, the funnel 222 will collect ash well from the flue gases.

It is obvious that the space saving solution shown in Figs. 2a to 2c for collecting ash and recovering heat can also be applied in connection with a CFB boiler.

Collecting ash between the second section 220 and the third section 230 of the flue gas duct is particularly advantageous, if the flow ducts or their parts become narrower in the transition from the second section 220 to the third section 230. Thus, if the ash were not removed, parts of the third section of the flow channel could be clogged in operation. In particular when catalysts 180 are used, the sections of the flow channel can become very small, as will be presented further below. Also, heat exchanger pipes equipped with ribs reduce the size of the sections of the flow channel

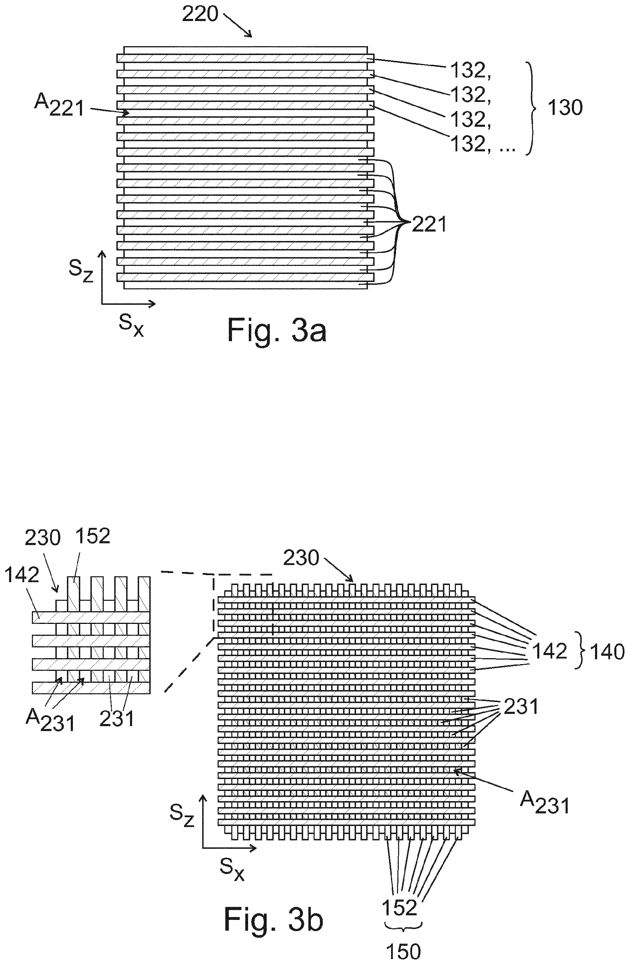

With reference to Figs. 3a and 1a, the second section 220 of the flue gas duct is equipped with a heat exchanger 130. The heat exchanger 130 comprises heat exchanger pipes 132. The heat exchanger pipes 132, in turn, restrict the flow in the second section 220 of the flue gas duct in such a way that the flue gas cannot flow through the pipes 132 but the flue gas will flow in areas 221 between them, as shown in Fig. 3a. Figure 3a shows the second section 220 of the flue gas duct seen from above.

Thus, the boiler 100 comprises
- first elements 132 restricting the flow of flue gases in said second section 220 of the flue gas flow duct, wherein parts 221 of the second section 220 of the flow duct are formed, which have a first average cross-sectional area A₂₂₁ in the horizontal plane.

All the parts 221 of the flow duct shown in Fig. 3a have the same cross-sectional area A₂₂₁, but it is obvious that said first elements 132 restricting the flow can be placed in such a way that the parts 221 of the flow duct have different cross-sectional areas. However, the parts 221 of the flow duct have an average cross-sectional area A₂₂₁ in the horizontal plane, called the first average cross-sectional area A₂₂₁ above.

With reference to Figs. 3b and 1a, the third section 230 of the flue gas duct is also equipped with heat exchangers 140 and 150. The heat exchanger 140 comprises heat exchanger pipes 142. The heat exchanger 150 comprises heat exchanger pipes 152. The heat exchanger pipes 142, 152, in turn, restrict the flow in the third section 230 of the flue gas duct in such a way that the flue gas cannot flow through the pipes 142, 152 but the flue gas will flow in areas 231 between them, as shown in Fig. 3b. Figure 3b shows the third section 230 of the flue gas duct seen from above. Heat exchanger pipes 142, 152 can extend in different directions in the different heat exchangers 140, 150, and/or the pipes 142 (and/or 152) of the same heat exchanger 140 (and/or 150) can be arranged in different directions or in the same direction with respect to each other.

Thus, the boiler 100 further comprises
- second elements 142, 152 restricting the flow of flue gases in said third section 230 of the flue gas flow duct, wherein parts 231 of the third section 230 of the flow duct are formed, which have a second average cross-sectional area A₂₃₁ in the horizontal plane.

Furthermore, in some cases
- the flow restricting elements 132, 142, 152, 180 are arranged in such a way that
- the second average cross-sectional area A₂₃₁ is smaller than the first average cross-sectional area A₂₂₁.

Referring to Fig. 1a, the flow of flue gases in the third section 230 can be restricted by a catalyst 180 instead of or in addition to the heat exchanger pipes 142, 152 (see Fig. 1 a). The catalyst 180 also restricts the flow in the third section 230 and thereby comprises flow restricting elements. The catalyst 180 can, for example, restrict small parts 231 of the flue duct which have a second average cross-sectional area A₂₃₁ in the horizontal plane.

All the parts 231 of the flow duct shown in Fig. 3b have the same cross-sectional area A₂₃₁, but it is obvious that said second flow restricting elements 142, 152, 180 can be placed in such a way that the parts 231 of the flow duct have different cross-sectional areas. However, the parts 231 of the flow duct have an average cross-sectional area A₂₃₁ in the horizontal plane, called the second average cross-sectional area A₂₃₁ above.

In such a solution, the removal of ash by means of, for example, the funnel 222 before the third section 230 is particularly useful, because the parts 231 of the third section 230 of the flue gas duct would be clogged with ash much more easily than the parts 221 of the second section 220 of the flue gas duct, if ash were not removed between said sections.

In such a solution, the operation of the boiler becomes more efficient. First of all, the second flow restricting elements of the third section 230 can comprise heat exchanger pipes 142, 152. Because the flue gases are cooled when flowing in the flow duct 210, 220, 228, 230, the temperature of the flue gases is lower in the third section 230 than in the second section 220. Thus, for making heat recovery more efficient, the quantity of heat recovery surfaces per volume (area per volume in the heat exchanger) is advantageously higher in the third section 230 than in the second section 220 of the flow duct. In practice, this means more densely arranged heat exchanger pipes in the above described way, wherein the parts 231 of the third section 230 of the flow duct are smaller than the parts 221 of the second section 220 of the flow duct, as described above. Secondly, the second flow restricting elements of the third section 230 can comprise a catalyst 180. The catalyst is a surfactant, wherein its area of contact with the flue gases is advantageously large. In practice, this means several small parts 231 of the flow duct instead of one larger part in the catalyst 180.

The above presented first flow restricting elements 132 restrict the flow in the second section 220 of the flue gas flow duct. Thus, the second section 220 has a first flow resistance between the upper part and the lower part of the second section 220. The flow resistance is, by definition, the relationship between the pressure difference and the volume flow. In this case, the first flow resistance is the pressure difference between the upper part and the lower part of the second section 220 in relation to the volume flow of flue gases passing through the second section 220. The upper part of the second section 220 refers to a point in the second section 220 that is upstream of all the first elements restricting the flow in the flow direction of the flue gases. The lower part of the second section 220 refers to the point in the second section 220 that is downstream of all the first flow restricting elements 132 in the flow direction of the flue gases.

The above presented second flow restricting elements 142, 152, 180 restrict the flow in the third section 230 of the flue gas flow duct. Thus, the third section 230 has a second flow resistance between the upper part and the lower part of the third section 230. In this case, the second flow resistance is the pressure difference between the upper part and the lower part of the third section 230 in relation to the volume flow of flue gases passing through the third section 230. The upper part of the third section 230 refers to the point in the third section 230 which is upstream of all the second flow restricting elements 142, 152 in the flow direction of the flue gases. The lower part of the third section 230 refers to the point in the third section 230 which is downstream of all the second flow restricting elements 142, 152, 180 in the flow direction of the flue gases.

Furthermore, boilers 100 often comprise, for example, heat exchanger pipes 132, 142, 152, wherein
- the flow restricting elements 132, 142, 152, 180 are arranged in such a way that
- said second flow resistance is higher than said first flow resistance.

Typically, the parts 221 of the second section 220 of the flue gas flow duct are, in the horizontal plane, areas which extend from one edge of the whole flue gas duct to another, having a width of, for example, about 50 mm to 150 mm.

Typically, the parts 231 of the third section 230 of the flue gas flow duct are, in the horizontal plane, rectangles delimited by orthogonal heat exchanger pipes 142 and 152. For example, the area left between the heat exchanger pipes 142 of the heat exchanger 140 (such as a combustion air heater) can have a width of about 35 mm. For example, the area left between the heat exchanger pipes 152 of the heat exchanger 150 (such as an economizer) can have a width of about 35 mm. Thus, seen from above, the size of the open vertical flow duct is about 35 mm x 35 mm. If these heat exchangers 140, 150 comprise heat exchanger pipes 142, 152 equipped with ribs, the space left between the pipes is typically about 15 mm, and correspondingly, seen from above, the size of the vertical open flow duct is about 15 mm x 35 mm.

The catalyst 180 can comprise flow duct parts 231 having the size of, for example, about 10 mm x 10 mm, in the horizontal plane.

In an embodiment,
- one of said first flow restricting elements 132 is a heat exchanger pipe 132, and
- one of said second flow restricting elements 142, 152, 180 is a heat exchanger pipe 142, 152, such as a heat exchanger pipe equipped with a rib, or a catalyst packet 180.

Figure 4 shows an embodiment of the boiler in connection with a CFB boiler. It is obvious that the technical solutions shown in the figure can be applied in other boiler types as well, such as in a grate boiler or a BFB boiler.

The embodiment of Fig. 4 comprises above presented technical solutions which are denoted with corresponding reference numerals. The third section 230 of the flue gas duct further comprises means 182 for supporting the catalyst packet 180. The heat exchanger 140 of the third section 230 is configured to heat the water circulating in the boiler. It can be an economizer. The heat exchanger 150 of the third section is a heater for combustion air.

Thus, the embodiment of Fig. 4 comprises a heater 150 for combustion air, arranged in said third section 230 of the flue gas flow duct. Furthermore, Fig. 4 shows means 160 for conveying air from the combustion air heater 150 to the furnace 120 of the boiler 100.

In such a solution, it is advantageous that the third section 230 is arranged close to the furnace 120. Thus, the means 160 for conveying air from the combustion air heater 150 to the furnace 120 of the boiler 100 can be relatively simple. Advantageously, the second section 220 is also arranged close to the furnace 120. Thus, the first section 210 of the flue gas duct is relatively simple. When both sections 220, 230 are close to the furnace, they are preferably at least partly on top of each other. Thus, this at least partial overlapping of the sections 220 and 230 has a synergy benefit: on one hand, a smaller boiler house 110 will be sufficient for the boiler 100; on the other hand, less complex means 160, 210 for conveying the gases (flue gas and combustion air) between the sections of the boiler will be sufficient.

Furthermore, Fig. 4 (as well as Figs. 1a, 1b, 2a and 2b without reference numerals) shows second means 232 for collecting ash in the lower part of said third section 230 of the flue gas flow duct. The second means 232 can comprise, for example, a second ash collecting funnel 232. Furthermore, Fig. 4 shows a second ash conveyor 234 for removing ash from said second ash collecting means 232.

The embodiment shown in Fig. 4 further comprises
- a flue gas filter 245 and
- a fourth section 240 of the flue gas flow duct, configured to convey flue gases from said third section 230 of the flue gas flow duct to said flue gas filter 245. In the figure, the fourth section 240 of the flue gas flow duct is configured to convey flue gases from the lower part of said third section 230 of the flue gas flow duct to said flue gas filter 245.

Advantageously, the fourth section 240 of the flue gas flow duct is configured to convey all the flue gases from said third section 230 of the flue gas flow duct to said flue gas filter 245.

The flue gas filter 245 is configured to purify the flue gases before they are removed from the boiler, for example into the air. The presented ash collecting arrangement, particularly the first means 222 for collecting ash in the lower part of said second section 220 of the flue gas flow duct, extend the maintenance interval of the filter 245, because less ash to be filtered is accumulated in the filter 245, thanks to the ash collecting. Further, the second ash collecting means 232 in the lower part of said third section 230 of the flue gas flow duct also extend the maintenance interval of the filter 245, for the same reason.

Figure 5a shows, in principle, an embodiment in which the ash collecting means in the lower part of said second section 220 of the flue gas flow duct comprise a first ash collecting funnel 222a and a second ash collecting funnel 222b. Furthermore, an ash conveyor 224a and an ash conveyor 224b are arranged on the bottom of the funnel 222a and on the bottom of the funnel 222b, respectively.

The solution of Fig. 5a comprises a first by-pass duct 228a and a second by-pass duct 228b, as shown in Figs. 2a to 2c. Also, the second ash collecting means 232 in the lower part of said third section 230 of the flue gas flow duct comprise a first ash collecting funnel 232a and a second ash collecting funnel 232b. Moreover, an ash conveyor 234a and an ash conveyor 234b are arranged on the bottom of the funnel 232a and on the bottom of the funnel 232b, respectively. Advantageously, both ash conveyors 224a, 224b are configured to convey ash in a direction that forms an angle of at least 90 degrees with both of said flow directions S₂₂₈ₐ and S_{228b}. This facilitates the positioning of the by-pass ducts 228a and 228b and the ash conveying means 224a and 224b in relation to each other.

Figure 5b shows an embodiment in a principle view. This embodiment, too, comprises the second part 220 and the third part 232 of the flue gas flow duct, and ash collecting means 222 therebetween. The ash collecting means 222 comprise a first ash collecting funnel 222a, a second ash collecting funnel 222b, and a third ash collecting funnel 222c. The use of several, such as at least two, ash collecting funnels (222a, 222b, 222c) will give the advantage that the ash collecting means 222 are lower in height than in a case of using only one ash collecting funnel. The height can be influenced to some extent by the angle of the walls of the funnel, but because ash is advantageously passed by gravity and freely along the wall of the funnel 222a, 222b, 222c, the angle of the wall of the funnel should be sufficiently steep with respect to the horizontal plane. Furthermore, an ash conveyor 224a, an ash conveyor 224b and an ash conveyor 224c are provided on the bottom of the funnel 222a, on the bottom of the funnel 222b and on the bottom of the funnel 222c, respectively. The directions S₂₂₄ₐ, S_{224b} and S_{224c}, in which ash is conveyed by the ash conveyors 224a, 224b, 224c (respectively), are indicated with the same arrows as the ash conveyors themselves. Said directions S₂₂₄ₐ, S_{224b} and S_{224c} are parallel. This direction can be marked, for example, as the direction S₂₂₄.

The solution of Fig. 5b comprises a first by-pass duct 228a, a second by-pass duct 228b and a third by-pass duct 228c. The first by-pass duct 228a for conveying flue gases from said second section 220 of the flue gas flow duct to said third section 230 of the flue gas flow duct defines the direction of the flue gases in the first by-pass duct S₂₂₈ₐ on the side of the second section 220 of the flue gas flow duct. Advantageously, the ash conveyors 224a, 224b and 224c are configured to convey ash in the direction S₂₂₄ which forms an angle of at least 90 degrees with said flow direction S₂₂₈ₐ. In Fig. 5b, said angle is 180 degrees.

Correspondingly, each by-pass duct 228a, 228b, 228c defines the flow direction of the flue gases on the side of the second section 220 of the flue gas flow duct, which flow directions are shown with references S₂₂₈ₐ, S_{228b} or S_{228c} in Fig. 5b, corresponding to the by-pass ducts 228a, 228b and 228c, respectively. Advantageously, at least one and preferably all of the ash conveyors 224a, 224b, 224c are configured to convey ash in a direction that forms an angle of at least 90 degrees with each of said flow directions (S₂₂₈, Fig. 1c; or S₂₂₈ₐ and S_{228b}, Fig. 2c; or S₂₂₈ₐ and S_{228b} and S_{228c}, Fig. 5b).

Furthermore, each by-pass duct 228a, 228b, 228c defines the second flow direction of the flue gases on the side of the third section 230 of the flue gas flow duct in said by-pass duct (not shown in the figure). The corresponding direction was previously indicated by the reference numerals S₂₂₉, S₂₂₉ₐ, S_{229b} in Figs. 1c and 2c. What has been said previously about the relationship between this direction or these directions and the downwards direction, will advantageously apply to the case of several by-pass ducts 228a, 228b, 228c as well.

The presented solutions are applicable in boilers, particularly boilers in which the first section 210 of the flue gas flow duct joins the second section 220 at a high location, wherein the sections 220 and 230 can be placed at least partly on top of each other, and they can be equipped with elements which are necessary for the operation, such as the elements 222 and 228, and advantageously at least some of the above-presented elements 130, 140, 150, and 180. This is generally the case in a fluidized bed boiler, such as a CFB boiler or a BFB boiler. Particularly in a CFB boiler, thanks to the cyclone 122 (Fig. 1a), the first section 210 of the flow duct joins the second section 220 at a high location.

## Claims

1. A boiler (100) comprising
- a furnace (120),
- a flue gas flow duct (210, 220, 230, 228 , 240) comprising a first section (210), a second section (220) and a third section (230), wherein
- said first section (210) of the flue gas flow duct is arranged to convey flue gases from said furnace (120) to said second section (220) of the flue gas flow duct,
- said second section (220) of the flue gas flow duct is substantially vertical, and
- said third section (230) of the flue gas flow duct is substantially vertical, the boiler (100) further comprising
- means (222) for collecting ash in the lower part of said second section (220) of the flue gas flow duct, and
- a by-pass duct (228) for conveying the flue gases from said second section (220) of the flue gas flow duct to said third section (230) of the flue gas flow duct; in which boiler (100)
- said second section (220) of the flue gas flow duct and said third section (230) of the flue gas flow duct are arranged in such a way in relation to each other that the orthogonal projection (P₂₃₀) of said third section (230) of the flue gas flow duct on a horizontal plane (P) comprises at least part of the orthogonal projection (P₂₂₀) of said second section (220) of the flue gas flow duct on said horizontal plane (P),
- the second section (220) of the flue gas duct is equipped with heat exchanger pipes (132),
- the third section (230) of the flue gas flow duct is equipped with
o at least one heat exchanger (140) configured to heat water circulating in the boiler, or
o a catalyst (180);
- the heat exchanger pipes (132) in the second section (220) of the flue gas flow duct forming parts (221) of the second section (220) of the flow duct through which the flue gas flows, which have a first average cross-sectional area (A₂₂₁) in the horizontal plane, and
- the heat exchanger (140) or catalyst (180) in said third section (230) of the flue gas flow duct form parts (231) of the third section (230) of the flow duct through which the flue gas flows, which have a second average cross-sectional area (A₂₃₁) in the horizontal plane,
**characterized in that**
- the heat exchanger pipes (132) and said heat exchanger (140) or catalyst (180) are configured in such a way that the second average cross-sectional area (A₂₃₁) is smaller than the first average cross-sectional area (A₂₂₁).

2. The boiler of claim 1, wherein
- an average flow direction of the flue gases defined by the second section (220)
o forms an angle not greater than 10 degrees with a downward direction (-Sy) or
o is directly downwards,

3. The boiler (100) according to claim 2, wherein
- said by-pass duct (228) for conveying flue gases from said second section (220) of the flue gas flow duct to said third section (230) of the flue gas flow duct determines a direction of the flue gases in the by-pass duct (S₂₂₈) on the side of the second section (220) of the flue gas flow duct, and
- said direction of flue gases in the by-pass duct (S₂₂₈) forms an angle (α) of at least 90 degrees with the downward direction (-Sy.)

4. The boiler (100) according to claim 2 or 3, comprising
- a second by-pass duct (228b) for conveying flue gases from said second section (220) of the flue gas flow duct to said third section (230) of the flue gas flow duct,
- said second by-pass duct (228b) for conveying flue gases from said second section (220) of the flue gas flow duct to said third section (230) of the flue gas flow duct determines a direction of the flue gases in the second by-pass duct (S_{228b}) on the side of the second section (220) of the flue gas flow duct,
- said direction of flue gases in the second by-pass duct (S_{228b}) forms an angle (α₂) of at least 90 degrees with the downward direction.

5. The boiler (100) according to any of the claims 2 to 4, wherein
- said by-pass duct (228) for conveying flue gases from said second section (220) of the flue gas flow duct to said third section (230) of the flue gas flow duct determines a second flow direction of the flue gases in the by-pass duct (S₂₂₉) on the side of the third section (230) of the flue gas flow duct, and
- said second direction of flue gases in the by-pass duct (S₂₂₉) on the side of the third section (230) forms an angle (α₂) smaller than 90 degrees with the downward direction (-Sy).

6. The boiler (100) according to any of the claims 1 to 5, wherein
- said by-pass duct (228) for conveying flue gases from said second section (220) of the flue gas flow duct to said third section (230) of the flue gas flow duct is dimensioned in such a way that
- the flow velocity of flue gases in said by-pass duct (228) is at least equal to the flow velocity of flue gases in said second section (220) of the flue gas flow duct.

7. The boiler (100) according to any of the claims 1 to 6, comprising
- an ash conveyor (224) for conveying ash away from said ash collecting means (222); advantageously, the ash conveyor (224) comprises a conveyor screw and a water circulation for cooling said conveyor screw.

8. The boiler (100) according to claim 7, wherein
- said by-pass duct (228) for conveying flue gases from said second section (220) of the flue gas flow duct to said third section (230) of the flue gas flow duct determines a direction of the flue gases in the by-pass duct (S₂₂₈) on the side of the second section (220) of the flue gas flow duct, and
- said ash conveyor (224) is configured to convey ash in a direction that forms an angle of at least 90 degrees with said flow direction (S₂₂₈ₐ).

9. The boiler (100) according to any of the claims 1 to 8, comprising
- a heater (150) for combustion air, arranged in said third section (230) of the flue gas flow duct, and
- means (160) for conveying air from said heater (150) for combustion air to the furnace (120) of said boiler (100).

10. The boiler (100) according to any of the claims 1 to 9, comprising
- a flue gas filter (245) and
- a fourth section (240) of the flue gas flow duct, configured to convey flue gases or the flue gases from said third section (230) of the flue gas flow duct to said flue gas filter (245).

11. The boiler (100) according to any of the claims 1 to 10, being a fluidized bed boiler, such as a circulating fluidized bed boiler or a bubbling fluidized bed boiler.

## Patentansprüche

1. Ein Dampferzeuger (100), der Folgendes aufweist:
- einen Ofen (120),
- einen Rauchgasströmungskanal (210, 220, 230, 228, 240), der einen ersten Abschnitt (210), einen zweiten Abschnitt (220) und einen dritten Abschnitt (230) aufweist, wobei
- der erste Abschnitt (210) des Rauchgasströmungskanals angeordnet ist, um Rauchgase von dem Ofen (120) zu dem zweiten Abschnitt (220) des Rauchgasströmungskanals zu leiten,
- der zweite Abschnitt (220) des Rauchgasströmungskanals im Wesentlichen vertikal ist, und
- der dritte Abschnitt (230) des Rauchgasströmungskanals im Wesentlichen vertikal ist, wobei der Dampferzeuger (100) darüber hinaus Folgendes aufweist:
- eine Einrichtung (222) zum Auffangen von Asche in dem unteren Teil des zweiten Abschnitts (220) des Rauchgasströmungskanals, und
- ein Bypasskanal (228) zum Leiten der Rauchgase von dem zweiten Abschnitt (220) des Rauchgasströmungskanals an den dritten Abschnitt (230) des Rauchgasströmungskanals; wobei in dem Dampferzeuger (100)
- der zweite Abschnitt (220) des Rauchgasströmungskanals und der dritte Abschnitt (230) des Rauchgasströmungskanals relativ zueinander so angeordnet sind, dass der orthogonale Vorsprung (P₂₃₀) des dritten Abschnitts (230) des Rauchgasströmungskanals auf einer horizontalen Ebene (P) mindestens einen Teil des orthogonalen Vorsprung (P₂₂₀) des zweiten Abschnitts (220) des Rauchgasströmungskanals auf der horizontalen Ebene (P) umfasst,
- der zweite Abschnitt (220) des Rauchgasströmungskanals mit Wärmetauscherrohren (132) ausgestattet ist,
- der dritte Abschnitt (230) des Rauchgasströmungskanals ausgestattet ist mit
∘ mindestens einem Wärmetauscher (140), der konfiguriert ist, in dem Dampferzeuger zirkulierendes Wasser zu erwärmen, oder
∘ einem Katalysator (180);
- wobei die Wärmetauscherrohre (132) in dem zweiten Abschnitt (220) des Rauchgasströmungskanals Teile (221) des zweiten Abschnitts (220) des Strömungskanals bilden, durch die das Rauchgas strömt, welche eine ersten durchschnittliche Querschnittfläche (A₂₂₁) in der horizontalen Ebene haben,und
- der Wärmetauscher (140) oder Katalysator (180) in dem dritten Abschnitt (230) des Rauchgasströmungskanals Teile (231) des dritten Abschnitts (230) des Strömungskanals bilden, durch die das Rauchgas strömt, welche eine zweite durchschnittliche Querschnittfläche (A₂₃₁) in der horizontalen Ebene haben,
**dadurch gekennzeichnet, dass**
- die Wärmetauscherrohre (132) und der Wärmetauscher (140) oder Katalysator (180) derart konfiguriert sind, dass die zweite durchschnittliche Querschnittfläche (A₂₃₁) kleiner als die erste durchschnittliche Querschnittfläche (A₂₂₁) ist.

2. Dampferzeuger gemäß Anspruch 1, wobei
- eine durch den zweiten Abschnitt (220) definierte durchschnittliche Strömungsrichtung der Rauchgase
∘ einen Winkel bildet, der nicht größer als 10° mit einer Abwärtsrichtung (-Sy) ist oder
∘ nach unten gerichtet ist.

3. Dampferzeuger (100) gemäß Anspruch 2, wobei
- der Bypasskanal (228) zum Leiten der Rauchgase von dem zweiten Abschnitt (220) des Rauchgasströmungskanals an den dritten Abschnitt (230) des Rauchgasströmungskanals eine Richtung der Rauchgase in dem Bypasskanal (S₂₂₈) auf der Seite des zweiten Abschnitts (220) des Rauchgasströmungskanals definiert, und
- die Richtung der Rauchgase in dem Bypasskanal (S₂₂₈) einen Winkel (α) von mindestens 90° mit der Abwärtsrichtung (-Sy) bildet.

4. Dampferzeuger (100) gemäß Anspruch 2 oder 3, wobei er Folgendes aufweist:
- einen zweiten Bypasskanal (228b) zum Leiten der Rauchgase von dem zweiten Abschnitt (220) des Rauchgasströmungskanals an den dritten Abschnitt (230) des Rauchgasströmungskanals,
- der zweite Bypasskanal (228b) zum Leiten der Rauchgase von dem zweiten Abschnitt (220) des Rauchgasströmungskanals an den dritten Abschnitt (230) des Rauchgasströmungskanals eine Richtung der Rauchgase in dem zweiten Bypasskanal (S_{228b}) auf der Seite des zweiten Abschnitts (220) des Rauchgasströmungskanals bestimmt,
- die Richtung der Rauchgase in dem zweiten Bypasskanal (S_{228b}) einen Winkel (α₂) von mindestens 90° mit der Abwärtsrichtung bildet.

5. Dampferzeuger (100) gemäß einem der Ansprüche 2 bis 4, wobei
- der Bypasskanal (228) zum Leiten der Rauchgase von dem zweiten Abschnitt (220) des Rauchgasströmungskanals an den dritten Abschnitt (230) des Rauchgasströmungskanals eine zweite Strömungsrichtung der Rauchgase in dem Bypasskanal (S₂₂₉) auf der Seite des dritten Abschnitts (230) des Rauchgasströmungskanals bestimmt, und
- die zweite Richtung der Rauchgase in dem Bypasskanal (S₂₂₉) auf der Seite des dritten Abschnitts (230) einen Winkel (α₂) bildet, der kleiner als 90° mit der Abwärtsrichtung (-Sy) ist.

6. Dampferzeuger (100) gemäß einem der Ansprüche 1 bis 5, wobei
- der Bypasskanal (228) zum Leiten der Rauchgase von dem zweiten Abschnitt (220) des Rauchgasströmungskanals zu dem dritten Abschnitt (230) des Rauchgasströmungskanals so dimensioniert ist, dass
- die Strömungsgeschwindigkeit der Rauchgase in dem Bypasskanal (228) mindestens gleich der Strömungsgeschwindigkeit der Rauchgase in dem zweiten Abschnitt (220) des Rauchgasströmungskanals ist.

7. Dampferzeuger (100) gemäß einem der Ansprüche 1 bis 6, der Folgendes aufweist:
- einen Aschebeförderer (224) zum Befördern der Asche weg von der Ascheauffangeinrichtung (222); wobei der Aschebeförderer (224) vorzugsweise einen Schneckenförderer und eine Wasserzirkulation zum Kühlen des Schneckenförderers aufweist.

8. Dampferzeuger gemäß Anspruch 7, wobei
- der Bypasskanal (228) zum Leiten der Rauchgase von dem zweiten Abschnitt (220) des Rauchgasströmungskanals an den dritten Abschnitt (230) des Rauchgasströmungskanals eine Richtung der Rauchgase in dem Bypasskanal (S₂₂₈) auf der Seite des zweiten Abschnitts (220) des Rauchgasströmungskanals bestimmt, und
- der Ascheförderer (224) konfiguriert ist, um Asche in einer Richtung, die einen Winkel von mindestens 90° mit der Strömungsrichtung (S₂₂₈ₐ) bildet, zu leiten.

9. Dampferzeuger (100) gemäß einem der Ansprüche 1 bis 8, wobei er Folgendes aufweist:
- ein Heizgerät (150) für Verbrennungsluft, das in dem dritten Abschnitt (230) des Rauchgasströmungskanals angeordnet ist, und
- Mittel (160) zum Befördern von Luft von dem Heizgerät (150) für Verbrennungsluft an den Ofen (120) des Dampferzeugers (100).

10. Dampferzeuger (100) gemäß einem der Ansprüche 1 bis 9, wobei er Folgendes aufweist:
- einen Rauchgasfilter (245) und
- einen vierten Abschnitt (240) des Rauchgasströmungskanals, der konfiguriert ist, um Rauchgase oder die Rauchgase von dem dritten Abschnitt (230) des Rauchgasströmungskanals an den Rauchgasfilter (245) zu leiten.

11. Dampferzeuger (100) gemäß einem der Ansprüche 1 bis 10, wobei es sich um einen Wirbelschicht-Dampferzeuger, wie zum Beispiel einen zirkulierenden Wirbelschicht-Dampferzeuger oder einen sprudelnden Wirbelschicht-Dampferzeuger handelt.

## Revendications

1. Chaudière (100) comprenant :
- un foyer (120),
- un conduit d'écoulement de gaz de combustion (210, 220, 230, 228, 240) comprenant une première section (210), une deuxième section (220) et une troisième section (230), dans laquelle :
- ladite première section (210) du conduit d'écoulement de gaz de combustion est conçue pour acheminer des gaz de combustion dudit foyer (120) à ladite deuxième section (220) du conduit d'écoulement de gaz de combustion,
- ladite deuxième section (220) du conduit d'écoulement de gaz de combustion est sensiblement verticale, et
- ladite troisième section (230) du conduit d'écoulement de gaz de combustion est sensiblement verticale,
la chaudière (100) comprenant en outre :
- un moyen (222) destiné à collecter des cendres dans la partie inférieure de ladite deuxième section (220) du conduit d'écoulement de gaz de combustion, et
- un conduit de dérivation (228) destiné à acheminer les gaz de combustion de ladite deuxième section (220) du conduit d'écoulement de gaz de combustion à ladite troisième section (230) du conduit d'écoulement de gaz de combustion ;
chaudière (100) dans laquelle :
- ladite deuxième section (220) du conduit d'écoulement de gaz de combustion et ladite troisième section (230) du conduit d'écoulement de gaz de combustion sont disposées de telle manière l'une par rapport à l'autre que la projection orthogonale (P₂₃₀) de ladite troisième section (230) du conduit d'écoulement de gaz de combustion sur un plan horizontal (P) comprend au moins une partie de la projection orthogonale (P₂₂₀) de ladite deuxième section (220) du conduit d'écoulement de gaz de combustion sur ledit plan horizontal (P),
- la deuxième section (220) du conduit de gaz de combustion est équipée de tubes d'échangeur de chaleur (132),
- la troisième section (230) du conduit d'écoulement de gaz de combustion est équipée :
∘ d'au moins un échangeur de chaleur (140) conçu pour chauffer l'eau circulant dans la chaudière, ou
∘ d'un catalyseur (180) ;
- les tubes d'échangeur de chaleur (132) de la deuxième section (220) du conduit d'écoulement de gaz de combustion formant des parties (221) de la deuxième section (220) du conduit d'écoulement, à travers lesquelles s'écoule le gaz de combustion, qui présentent une première aire de section transversale moyenne (A₂₂₁) dans le plan horizontal, et
- l'échangeur de chaleur (140) ou le catalyseur (180) de ladite troisième section (230) du conduit d'écoulement de gaz de combustion forme des parties (231) de la troisième section (230) du conduit d'écoulement, à travers lesquelles s'écoule le gaz de combustion, qui présentent une seconde aire de section transversale moyenne (A₂₃₁) dans le plan horizontal,
**caractérisée en ce que** :
- les tubes d'échangeur de chaleur (132) et ledit échangeur de chaleur (140) ou catalyseur (180) sont conçus de telle sorte que la seconde aire de section transversale moyenne (A₂₃₁) est inférieure à la première aire de section transversale moyenne (A₂₂₁).

2. Chaudière selon la revendication 1, dans laquelle :
- une direction moyenne d'écoulement des gaz de combustion définie par la deuxième section (220) :
∘ forme un angle n'excédant pas 10 degrés dans une direction vers le bas (-Sy) ou
∘ est dirigée vers le bas.

3. Chaudière (100) selon la revendication 2, dans laquelle :
- ledit conduit de dérivation (228) destiné à acheminer des gaz de combustion de ladite deuxième section (220) du conduit d'écoulement de gaz de combustion à ladite troisième section (230) du conduit d'écoulement de gaz de combustion détermine une direction des gaz de combustion dans le conduit de dérivation (S₂₂₈) du côté de la deuxième section (220) du conduit d'écoulement de gaz de combustion, et
- ladite direction de gaz de combustion dans le conduit de dérivation (S₂₂₈) forme un angle (α) d'au moins 90 degrés avec la direction vers le bas (-Sy).

4. Chaudière (100) selon la revendication 2 ou 3, comprenant :
- un second conduit de dérivation (228b) destiné à acheminer des gaz de combustion de ladite deuxième section (220) du conduit d'écoulement de gaz de combustion à ladite troisième section (230) du conduit d'écoulement de gaz de combustion,
- ledit second conduit de dérivation (228b) destiné à acheminer des gaz de combustion de ladite deuxième section (220) du conduit d'écoulement de gaz de combustion à ladite troisième section (230) du conduit d'écoulement de gaz de combustion détermine une direction des gaz de combustion dans le second conduit de dérivation (S_{228b}) du côté de la deuxième section (220) du conduit d'écoulement de gaz de combustion,
- ladite direction de gaz de combustion dans le second conduit de dérivation (S_{228b}) forme un angle (α₂) d'au moins 90 degrés avec la direction vers le bas.

5. Chaudière (100) selon l'une quelconque des revendications 2 à 4, dans laquelle :
- ledit conduit de dérivation (228) destiné à acheminer des gaz de combustion de ladite deuxième section (220) du conduit d'écoulement de gaz de combustion à ladite troisième section (230) du conduit d'écoulement de gaz de combustion détermine une seconde direction d'écoulement des gaz de combustion dans le conduit de dérivation (S₂₂₉) du côté de la troisième section (230) du conduit d'écoulement de gaz de combustion, et
- ladite seconde direction de gaz de combustion dans le conduit de dérivation (S₂₂₉) du côté de la troisième section (230) forme un angle (α₂) inférieur à 90 degrés avec la direction vers le bas (-Sy).

6. Chaudière (100) selon l'une quelconque des revendications 1 à 5, dans laquelle :
- ledit conduit de dérivation (228) destiné à acheminer des gaz de combustion de ladite deuxième section (220) du conduit d'écoulement de gaz de combustion à ladite troisième section (230) du conduit d'écoulement de gaz de combustion est dimensionné de manière que :
- la vitesse d'écoulement de gaz de combustion dans ledit conduit de dérivation (228) soit au moins égale à la vitesse d'écoulement de gaz de combustion dans ladite deuxième section (220) du conduit d'écoulement de gaz de combustion.

7. Chaudière (100) selon l'une quelconque des revendications 1 à 6, comprenant :
- un convoyeur de cendres (224) destiné à acheminer des cendres hors dudit moyen collecteur de cendres (222) ; avantageusement, le convoyeur de cendres (224) comprend une vis transporteuse et une circulation d'eau destinée à refroidir ladite vis transporteuse.

8. Chaudière (100) selon la revendication 7, dans laquelle :
- ledit conduit de dérivation (228) destiné à acheminer des gaz de combustion de ladite deuxième section (220) du conduit d'écoulement de gaz de combustion à ladite troisième section (230) du conduit d'écoulement de gaz de combustion détermine une direction des gaz de combustion dans le conduit de dérivation (S₂₂₈) du côté de la deuxième section (220) du conduit d'écoulement de gaz de combustion, et
- ledit convoyeur de cendres (224) est conçu pour acheminer des cendres dans une direction qui forme un angle d'au moins 90 degrés avec ladite direction d'écoulement (S₂₂₈ₐ).

9. Chaudière (100) selon l'une quelconque des revendications 1 à 8, comprenant :
- un réchauffeur (150) d'air de combustion, disposé dans ladite troisième section (230) du conduit d'écoulement de gaz de combustion, et
- un moyen (160) destiné à acheminer l'air dudit réchauffeur (150) d'air de combustion, au foyer (120) de ladite chaudière (100).

10. Chaudière (100) selon l'une quelconque des revendications 1 à 9, comprenant :
- un filtre à gaz de combustion (245), et
- une quatrième section (240) du conduit d'écoulement de gaz de combustion, conçue pour acheminer des gaz de combustion ou les gaz de combustion de ladite troisième section (230) du conduit d'écoulement de gaz de combustion audit filtre à gaz de combustion (245).

11. Chaudière (100) selon l'une quelconque des revendications 1 à 10, consistant en une chaudière à lit fluidisé, telle qu'une chaudière à lit fluidisé circulant ou une chaudière à lit fluidisé bouillonnant.
